# EUROPEAN PATENT SPECIFICATION

(11) **EP 4 353 939 B1**
(45) Date of publication and mention of the grant of the patent: **12.11.2025**
(21) Application number: 23201881.2
(22) Date of filing: 05.10.2023
(51) Int. Cl.: E06B 7/28, H01R 12/77, H01R 12/79, H01R 31/06, H02G 11/00, H01R 13/58

(54) **COMPONENT OF A DOOR MAKING AN ELECTRICAL CONNECTION BETWEEN THE SHUTTER AND THE JAMB OF THE DOOR, AND DOOR COMPRISING SAID COMPONENT**
KOMPONENTE EINER TÜR ZUR HERSTELLUNG EINER ELEKTRISCHEN VERBINDUNG ZWISCHEN DEM FENSTERLADEN UND DEM TÜRPFOSTEN UND TÜR MIT DER BESAGTEN KOMPONENTE
COMPOSANT D'UNE PORTE ASSURANT UNE CONNEXION ÉLECTRIQUE ENTRE LE VOLET ET LE MONTANT DE LA PORTE, ET PORTE COMPRENANT LEDIT COMPOSANT

(30) Priority: 14.10.2022 IT 202200021225
(43) Date of publication of application: 17.04.2024
(73) Proprietor: Koblenz S.P.A., 47853 Coriano (RN) (IT)
(72) Inventor: MIGLIORINI, Massimo, 47853 Coriano (RN) (IT)
(74) Representative: Zanotti, Laura

(56) References cited:
- FR-A1- 2 337 446
- US-A1- 2015 031 224
- US-A1- 2021 207 420

## Description

The present invention concerns an electrical connection component between the jamb and the shutter of a door, in particular of a swing door.

### Field of invention

In more detail, the invention concerns an electrical connection component between the jamb and the shutter of a door of the aforementioned type, designed and created in particular for a swing door, but which can be used for any type of door, for example, for folding doors where the component can be used between a first jamb and a first shutter of the folding door, between the first shutter and a second shutter, between any further adjacent leaves and between a last shutter and a second jamb opposite the first door jamb, for which electrical movement of the door is necessary.

In the case of folding doors, as many electrical connection components as there are couplings between the elements can be used, whether between jamb and door or between two adjacent doors.

The component can further be used between a door and a body of a piece of furniture or for the electrical movement of a sliding door.

In the following the description will be aimed at the use of the component for a swing door but it is clear that it should not be considered limited to this specific use.

### Prior art

As is well known, there are currently systems for the electrical connection of doors, which provide a cable sheath inserted in a hinge of a hinge pivot, for example, of a door, in which a cable passes through an opening of the sheath in a first part rotating on the hinge and inserts into a second part rotating on the hinge, from which it exits via an exit duct.

The hinge of a door has the purpose of rotating the door around the hinge and the rotation of the door around the hinge provides for the transition from an open position to a closed position, in which any electrical cables can get stuck.

**It** is clear that this procedure, despite the presence of a sheath, can wear out the electrical cables, especially during prolonged use over time, due to the interlocking of the hinge which exerts a force, directly or indirectly, on the cables, for example through the sheath.

Furthermore, as is known, there are currently systems for the electrical connection of doors which include a first cable that passes through a hinge or a hinge pivot, on the side of the jamb, at the height of an upper fixing flange, and is inserted into the corresponding upper flange of the hinge, in the shutter part.

A second cable crosses the hinge, on the jamb side, at the height of a lower fixing flange and is inserted into the corresponding lower flange of the hinge, on the shutter side. Both cables are protected by a flexible corrugated sheath which, during the rotation of the opening and closing parts of the hinge, slides within respective seats in the hinge bodies (in which the cables are also located) and flexes to exit and reenter depending on the need.

It is clear that the presence of a flexible wrinkled sheath to protect the cables that pass through the hinge makes the hinge itself bulkier and reduces its travel. Furthermore, even if inside the sheath, it is possible that the electrical cables are damaged, since the cables remain exposed, particularly when closing the door where, although the corrugated sheath may be reduced, the length of the cables remains unchanged.

Furthermore, there are multi-axis hinges that include two connectors arranged respectively in a first and second body of a hinge, in which there is a connection cable between the two connectors, which passes between the connection bodies of the hinge.

It is clear that these hinges are purely recessed hinges with electrical connections. Consequently, the risks of damage to electrical cables mentioned above remain as such as a cable can get stuck in the hinge during the rotation of the door around the hinge itself.

Document US 2015/0031224 A1 discloses a hinge for recessed installation between a door frame and a door panel. The hinge has two housings adapted for recessing in the door frame and in the door panel, a link assembly extending between and pivotally interconnecting the two housings, and a multiconductor cable extending between the housings and having opposite ends each in a respective one of the housings. Respective connectors on the ends of the cable are fixed in the housings. Document FR 2 377 446 A1 discloses an electrical connection for the electrical powering of a door, which is obtained as hidden between door and frame when the door is closed. A cable connects door and frame and, when the door is closed, is totally hidden between door and frame. In a first embodiment the cable has a circular section and, when the door is closed, it disappears in a space between the two faces of the door panel, its in-out movement being assisted by a shaped spring. In a second embodiment the cable is a flat multiconductor cable which, when the door is closed goes folded in an accordion-like shape between door panel and door frame. Document US 2021/207420 A1 discloses a door system comprising a door frame adapted to be mounted within an opening, a door pivotally attached to the door frame, an AC/DC converter configured to be electrically connected to an AC power unit operably associated with the door system. A pre-wired receptacle is disposed in a slot in the door. A DC electric device is removably disposed in the pre-wired receptacle and electrically connected to the AC/DC. The pre-wired receptacle comprises an electrical connector electrically connected to the AC/DC converter.

### Purpose of the invention

In light of the above, it is therefore the purpose of the present invention to allow the electrical connection between a jamb and a door shutter, whatever the operating kinematics of the door itself.

Another purpose of the invention is to protect, or reduce the risk of damaging an electrical cable, which allows the electrical connection to be made using an easy-to-manufacture component.

Another purpose of the invention is to cover the electrical cable with a protective foil, preserving the aesthetics of the door and avoiding the exposure of the electrical cable.

A further purpose of the present invention is to provide the tools necessary for the creation of a door that includes the electrical connection component between the jamb and the shutter of the aforementioned door.

Another purpose of the present invention is to provide a component that can be inserted into doors already assembled and in use, simply by creating slots in the door and inserting the component itself.

### Object of the invention

It is, therefore, object of the present invention a component according to claim 1 for a door comprising a shutter and a jamb, for the electrical connection between said shutter and said jamb, the shutter having a given opening kinematics with respect to the jamb, wherein said component comprises a first case configured to be mounted in said shutter and a second case configured to be mounted in said jamb, comprising a flat-type power supply cable having a first end capable to be connected to a first connector and a second end capable to be connected to a second connector, and a protective casing having a variable stiffness configured to protect said cable, and capable to allow the bending of a first fraction of said cable within said first case, the shifting of at least one second fraction of said cable between said first and second case, and a section of said protective casing being exposed out from at least one of said first and second cases, such that said component being capable of, by means of a greater or smaller length of said section being exposed, compensating for differences of kinematics of the shutter and/or of the outreach of the opening thereof.

Preferably according to the invention, said protective casing comprises a protection foil configured to protect said cable, wherein: said foil is configured for being exposed from said first case to said second case; said foil comprises a first, a second and a third segment; and said second segment is configured to bend between said first and second case.

Further according to the invention, said foil may comprise a first plate and a second plate, between which there is said cable.

Still according to the invention, a portion of said first plate may adhere to a portion of said second plate by means of glue, double-sided tape, or other mutual coupling means.

Always according to the invention, said door may open, from said first case to the exterior and, whereas said door closes, from the exterior towards said first case, such to bend said cable within said first case.

Preferably according to the invention, said first case comprises a first dimension and said second case comprises a fourth dimension, such that said first dimension is greater than said fourth dimension.

Further according to the invention, said first case may comprise a first flange and said second case comprises a second flange to fasten said component to respectively an outline of said shutter and jamb.

Still according to the invention, said first flange may comprise a first aperture arranged asymmetrical with respect to an axis of symmetry of the surface of said first flange and said second flange comprises a second aperture arranged asymmetrical with respect to an axis of symmetry of the surface of said second flange.

Always according to the invention, said first segment may be close to a first end of said foil, said third segment may be close to a second end of said foil and said second segment may be in between said first and third segment.

Preferably according to the invention, said component comprises: a first clamp terminal block arranged to an end of said first case opposite said first flange; a second clamp terminal block arranged to an end of said second case opposite said second flange; wherein said component is configured to protect said cable, wherein said first and second fraction of said cable are configured to respectively couple to said first and second connector, which are respectively pluggable to said first and second clamp terminal block, wherein said first segment is configured to cover a portion of said second fraction of said cable in a location between said first fraction of said cable and said first flange; and said third segment is configured to cover a portion of said second fraction of said cable in a location between said second clamp terminal block and said second flange.

Further according to the invention, said cable may wrap itself within said first case by means of a guide device, preferably around a wrapping pivot, whereas said door closes.

Still according to the invention, said foil may comprise a flexible metallic material configured to bend said foil in at least a part thereof.

Always according to the invention, a door may comprise said shutter and said jamb, wherein said shutter comprises a housing to host said first case and said jamb comprises a housing to host said second case.

### Brief description of the figures

The present invention will be now described, for illustrative but not limitative purposes, according to its preferred embodiments, with particular reference to the figures of the enclosed drawings, wherein:
figure 1 shows, in perspective view, an embodiment of an electrical connection component between the jamb and the shutter of a door, according to the present invention, in which said component is mounted;
figure 2 shows, in perspective view, a component, object of the present invention;
figure 3 shows, in perspective view, the elements of an embodiment of the component according to the present invention and an electrical connection cable, stretched along its main length;
figure 4 shows, in perspective view, an electrical connection cable;
figure 5 shows, in section, an embodiment of the component object of the present invention, a door and a jamb on which the component is mounted, in which the door is closed;
figure 6 shows, in section, an embodiment of the component object of the present invention, a door and a jamb on which the component is mounted, in which the door is open;
figure 7 shows, in perspective view, the elements of an embodiment of the component according to the present invention;
figures 8A, 8B, and 8C show, in perspective view, the component of the present invention, respectively in a first open position, in a closed position, and in a second open position;
figure 9 shows, in section, an embodiment of the component according to the present invention and a structural detail of said embodiment; and
figure 10 shows, in perspective view, an embodiment of an electrical connection component between the jamb and the shutter of a door, according to the present invention, in which said component and also hinges for moving the shutter are mounted.

### Detailed description

In the various figures the similar parts will be indicated with the same numerical references.

The component 1 of the present invention essentially comprises a first case 10, a second case 20, an electrical connection member, for example, an electrical connection cable 30' comprising a series of copper wires for the electrical connection, and a protective casing with variable rigidity.

By variable rigidity protective casing it is meant a covering of said electrical connection cable 30', which can for example be a covering element made of deformable material having a variable thickness along the length of the element itself.

Or, by variable rigidity protective casing, it is meant an element comprising a protective foil 30 of the electrical connection member 30', which covers said electrical connection member 30' at least in part.

A portion of said casing, during the opening of the door, is able to project from at least one of the first 10 and second 20 cases, to allow the door to reach out.

In this way, even with different kinematics and/or opening arms of the door, the component is able to compensate for these kinematic differences, with a greater or lesser extent of escape from at least one of said first case 10 and second case 20.

The length of the section of said casing that ejects defines an interval of adaptation to the different kinematics.

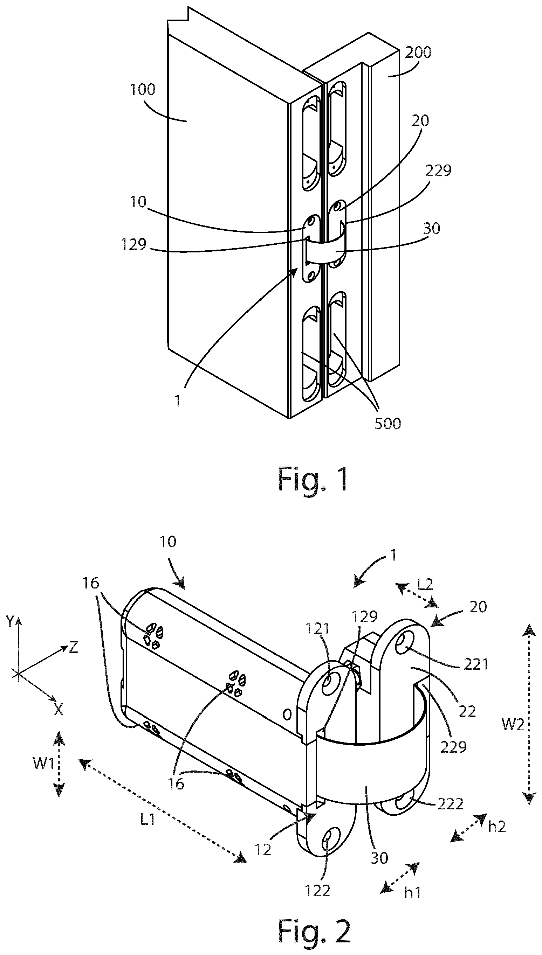

Referring to figure 1, said first case 10 is mounted in the shutter 100 of a door, and said second case 20 is mounted in the jamb 200, and are connected to each other by said protective foil 30.

In particular, said first case 10 can be recessed into said shutter 100, and said second case 20 can be recessed into said jamb 200, respectively in a housing part or recess, of said shutter 100 and jamb 200 (or frame), to house said first 10 and second 20 case.

Said component 1, in use, is not visible when the door is closed.

Referring to figure 2, said first case 10 comprises a first predominant dimension L1, which extends along a first X axis, a second dimension w1, which extends along a second Y axis, and a third dimension h1, which extends along a third Z axis.

Said first case 10 fits, at least partially, into a housing obtained in said shutter 100.

Furthermore, said housing obtained in said shutter 100 has a depth along said first X axis to accommodate said first case 10, at least equal to L1.

Said first case 10 includes a first fixing flange 12 configured to fix said first case 10 to said shutter 100 by means of two fixing screws that are screwed into a first 121 and a second 122 fixing hole for said shutter 100.

Said first 121 and second 122 fixing holes are preferably arranged aligned along an axis of symmetry of said first flange 12, parallel to said second Y axis, or substantially at the center of said flange 12 along said Z axis.

Said first flange 12 also includes a first aperture 129, through which said foil 30 emerges from said first case 10.

Said first aperture 129 is arranged offset with respect to said axis of symmetry of said first flange 12 parallel to said second Y axis.

In particular, said first aperture 129 is preferably arranged at a non-zero distance from said symmetry axis of said first flange 12, which corresponds to a separation line between said first 121 and second 122 fixing holes.

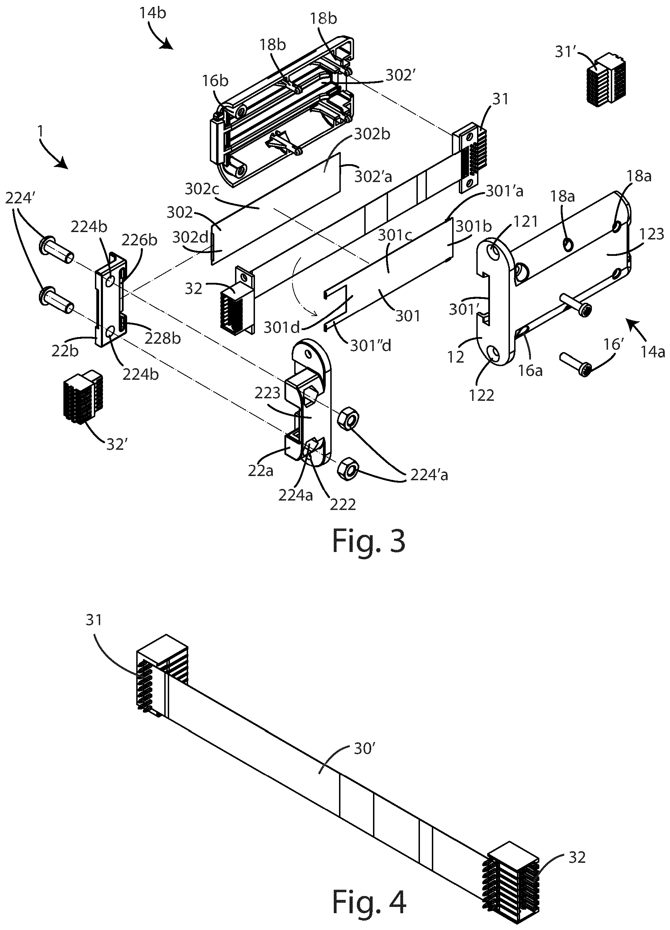

Referring to figures 2 and 3, said first case 10 includes a first semi-case 14a and a second semi-case 14b (visible in figure 3), joined by a plurality of screws 16', for example two, which are inserted into two through holes 16a that pass through the body of said first case 10 along said Z direction and by a fixing system 18.

Said first semi-case 14a includes a plurality of cavities 18a for snap fixing, for example four cavities, to which to fix said second semi-case 14b and a plurality of recesses 16a, for example two recesses, which constitutes a plurality of through holes through which two screws 16' pass to assemble said first 14a and second 14b semi-case.

Said first semi-case 14a also includes said face 123, which extends substantially parallel to the housing, into which said first case 10 can be inserted, and a first hollow internal portion 301'.

Said second semi-case 14b is configured to act as a cover of said case 10.

Said second semi-case 14b includes a second internal hollow portion 302', two threaded bottoms 16b configured to combine with said two screws 16' to assemble said first semi-case 14a to said second semi-case 14b, and four protrusions 18b for snap fixing of said first 14a and second 14b semi-case.

Said fixing system 18 includes said plurality of cavities 18a for snap fixing, included in said first semi-case 14a and said protrusions 18b for snap fixing, included in said second semi-case 14b.

Although not shown in figure 3, said second semi-case 14b also includes a face, which mirrors said face 123, and which extends substantially parallel to the housing into which it can be inserted.

Referring to figure 2, said second case 20 includes a fourth dimension L2, which extends along said first X axis, a fifth dimension w2, which extends along said second Y axis, and a sixth dimension h2, which extends along said third Z axis.

Said fourth dimension L2 is smaller than said first dimension L1, said second w1 and fifth w2 dimensions are substantially equal, and said third h1 and sixth h2 dimensions are substantially equal.

Similarly to said first case 10, said second case 20 fits, at least partially, into a housing obtained in said jamb 200.

Furthermore, said housing obtained in said jamb 200, has a depth along said first X axis to accommodate said second case 20, at least equal to L2.

Said second case 20 includes a second fastening flange 22 configured to fix said second case 20 to the jamb 200 by means of two fixing screws, which are inserted into a third 221 and a fourth 222 fixing hole.

Said third 221 and fourth 222 fixing hole are preferably arranged aligned along an axis of symmetry of said second flange 22, parallel to said second Y axis.

Said second flange 22 also includes a second aperture 229, through which said foil 30 emerges from said second case 20.

Said second aperture 229 is arranged offset with respect to an axis of symmetry of said second flange 22.

Said second aperture 229 is preferably arranged at a non-zero distance from an axis of symmetry of said second flange 22, which corresponds to a separation line between said third 221 and fourth 222 fixing holes.

Said arrangement of said first 129 and second 229 apertures allows said component 1 to be used with rotation kinematics of a different nature.

In fact, said arrangement of said first 129 and second 229 apertures allows said component 1 to be used with different types of doors and with different types of hinges.

In particular, depending on the rotation direction of the door with respect to the jamb, said first 129 and second 229 apertures can be more or less close to each other, and consequently increase or reduce the outreach of said component 1.

Preferably, the offset of said first and second apertures is opposite to each other.

In particular, when the door is open, if said first aperture 129 is offset to the right, said second aperture 229 is offset to the left with respect to said axes of symmetry of said first 12 and second 22 flange, which coincide with each other when the door is open.

In this way, when the door is open, the distance between said first 129 and second 229 apertures is greater than the distance between said axes of symmetry of said first 12 and second 22 flange.

Referring again to figures 2 and 3, said second case 20 includes a third semi-case 22a and a fourth semi-case 22b (visible in figure 3).

Said third 22a and fourth 22b semi-case can be joined by means of two assembly screws 224' of said second case 20, which are inserted into two holes 224b for said assembling screws 224', passing through the body of said second case 20 in one direction along said third axis Z and are screwed to two assembly bolts 224'a of said second case 20.

Said third semi-case 22a includes said third 221 and fourth 222 holes for fixing to the jamb 200, two recesses 224a to house said bolts 224'a, and a face 223, which extends parallel to the housing of said jamb 200 into which it is inserted.

Said fourth semi-case 22b includes a recess 226b, a housing seat 228b, and a pair of holes 224b, through which said screws 224' pass.

Although not shown in figure 3, said fourth semi-case 22b also includes a face, mirror-like to said face 223, and which extends parallel to the housing of said jamb 200 into which it is inserted.

Referring to figure 4, said electrical connection cable 30' comprises, at a first end, a first multi-pole connector 31 and, at a second end, a second multi-pole connector 32, both, for example, of the dinkle^{™} type.

Said cable 30' is substantially flat-wired, with a plurality of copper wires each connected to a pole of each of said first 31 and second 32 connectors.

Said 30' cable also includes a first fraction and a second fraction.

Said first fraction of said cable 30' is configured to bend inside said first case 10.

Said second fraction is configured to be wrapped, or partially covered, by said protective casing so as to translate in a protected manner between said first 10 and second 20 case.

Since said protective casing covers said second fraction of said cable 30', the latter is more rigid than said first fraction, which is not covered by said protective casing.

As mentioned, said protective casing can comprise a foil 30.

Referring to figure 3, said foil 30 is essentially elongated and develops with a predominant length along said first X axis, with a width along said second Y axis, and includes a first plate 301 and a second plate 302.

Said foil 30 is preferably made of flexible metallic material, for example, steel.

Said electrical connection cable 30' is interposed between said first 301 and second 302 plates.

Therefore, said foil 30 is essentially a two-layer foil, which covers at least a portion of said cable 30'.

Said cable 30' has a width such that, when said component 1 is mounted in said door, it develops along said second Y axis and has a length such that it develops along said first X axis.

Said first 301 and second 302 plates have the same width, greater than said width of said cable 30'.

Said first plate 301 has a length less than or equal to the length of said second plate 302, which is less than said length of said cable 30'.

In the width of said first 301 and second 302 plates exceeding the width of said cable 30', said first 301 and second 302 plates are in contact, for example by means of glue or double-sided tape or other mutual attachment system.

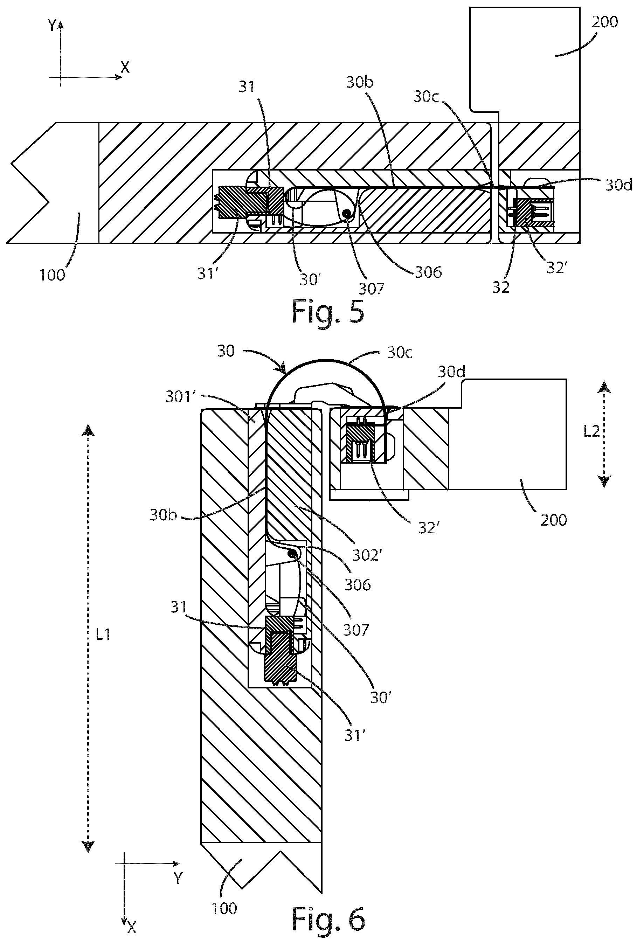

Referring to figures 5 and 6, said foil 30 is configured to guide said cable 30' in a flexible manner and includes at least a first 30b, second 30c, and third 30d segment, which will be described below.

Said first fraction of said cable 30' has a first end that can be coupled to a first terminal block 31', for example, by contact, interlocking, or perforation by the poles of said first connector 31 and a second end, in contact with said second fraction of said cable 30'.

Said first segment 30b is configured to cover a portion of said second fraction of said cable 30', which extends inside said first case 10.

Said third segment 30d is configured to cover a portion of said second fraction of said cable 30' in proximity to said second connector 32 and a second terminal block 32'.

Said cable can be coupled to said second terminal block 32', for example, by contact, interlocking, or perforation by the poles of said second connector 32.

In particular, said third segment 30d covers a portion of said second cable fraction 30' between said second flange 22 and second connector 32.

Said second segment 30c is in an intermediate position between said first 30b and third 30d segment.

Referring to figures 1, 2, 8A, and 8C, said second segment 30c is shown flexed and in contact between said first 10 and second 20 cases.

Said second segment 30c allows said cable 30' to bend in a controlled manner and to slide through said first 129 and second 229 apertures.

Said first 30b, second 30c, and third 30d segment are visible in figures 5, 6, and 9.

Referring again to figure 3, said first plate 301 includes a first 301b, second 301c, and third 301d section, and said second plate 302 includes a fourth 302b, fifth 302c and sixth 302d section.

When said first 301 and second 302 plates cover said cable 30', said fourth 302b, fifth 302c and sixth 302d section cover said cable 30' respectively in correspondence with said first 301b, second 301c, and third 301d section.

Therefore, said first segment 30b essentially includes said first 301b and fourth 302b section, said second segment 30c essentially includes said second 301c and fifth 302c section, and said third segment 30d essentially includes said third 301d and sixth 302d section.

Said third section 301d includes two appendixes 301"d configured to connect to said second connector 32 inside said second case 20 and to be fixed by means of a system of screws 224' and bolts 224'a. **It** is also possible to bend said two appendixes 301"d to accommodate them in said housing seat 228b of said fourth semi-case 22b.

Said sixth section 302d is configured to fit inside said recess 226b of said fourth semi-case 22b, as will be described below.

Said recess 226b is, therefore, configured to accommodate a fraction, for example, an end of said sixth section 302d which is fitted between said recess 226b and said third semi-case 22a, when said third 22a and fourth semi-case 22b are assembled.

Said first section 301b can include, as shown in figure 3, two lateral fins 301"a, which extend essentially perpendicular to the main dimension of said first plate 301.

Said lateral fins 301"a are configured, when said first 301 and second 302 plates cover said cable 30', to close on a fraction of said fourth 302b section of said second plate 302.

Said lateral fins 301"a have greater flexibility than said first plate 301.

Said fourth section 302b can include, as shown in figure 3, on a fraction of one of its ends, a tail 302"a configured to touch said first 31 connector or said first section 301b.

Referring again to figure 3, said first 31' and second 32' terminal blocks are shown not connected to said first 31 and second 32 multi-pole connectors of said cable 30' and disconnected from said first 10 and second 20 cases respectively.

Said first 31' and second 32' terminal blocks can be connected respectively to said first 31 and second 32 connectors, and can be inserted respectively into said first 10 and second 20 cases.

Referring to figures 5 and 6, the connections respectively between said first terminal block 31' and said first connector 31, and between said second terminal block 32' and said second connector 32 can take place, for example, by means of screw connections, spring connections and plug-in connections.

Referring to figures 3, 5 and 6, said first terminal block 31' is housed at one end of the first case 10 opposite to said first flange 12 for fixing to the shutter 100 (said first flange 12 visible in figures 3 and 6).

Similarly, still referring to figures 3, 5 and 6, said second terminal block 32' is housed at one end of said second case 20 opposite to said second flange 22 for fixing to the jamb 200.

Furthermore, said first terminal block 31' can be connected to at least one or more copper wires, or another power cable, to send the electrical power to a terminal, for example, to operate a lock or a latch connected to said cable.

Furthermore, said second terminal block 32' comprises a first and a second end and is at least partially inside said second case 20.

Said first end of said second terminal block 32' connects, internally to said second case 20, to a second connector 32 of the cable 30', while said second end of said second terminal block 32' connects, and in the opposite direction to said second case 20 to a further connector or to a plurality of electrical cables.

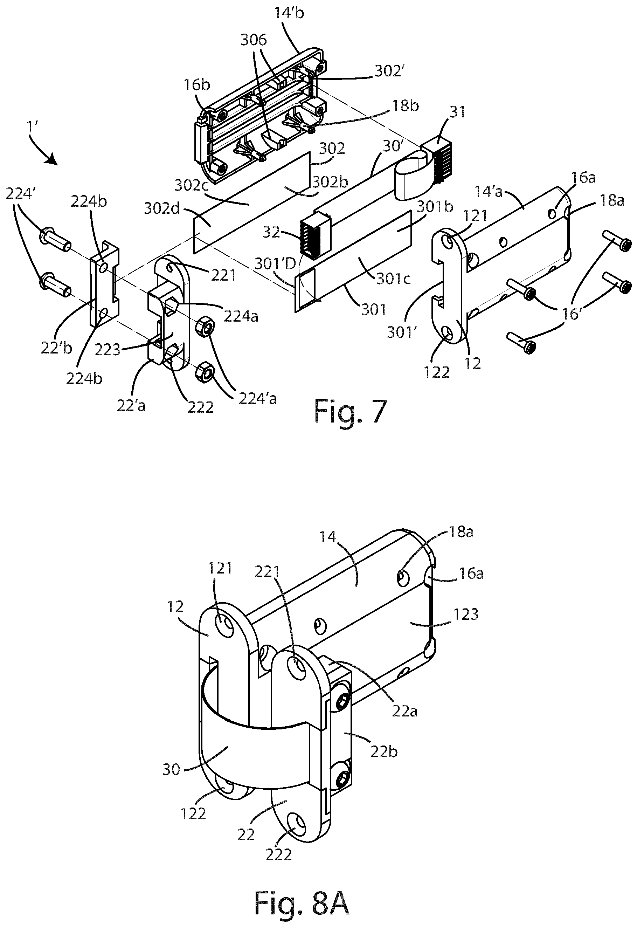

Referring to figure 7, a second embodiment of component 1' is described, which differs from the first embodiment of component 1 described above, due to the following characteristics.

Referring to figure 7, a fifth semi-case 14'a, similar to said first semi-case 14a, from which it differs in that it includes four cavities 18a, which constitute four through holes through which said four screws 16' pass to assemble said first 14a and second 14b semi-case.

Furthermore, a sixth semi-case 14'b, similar to said second semi-case 14b, from which it differs in that it includes four threaded bottoms 16b configured to combine with said four screws 16' to assemble said third 14'a and fourth 14'b semi-case.

Said sixth semi-case 14'b includes a guiding device that allows said cable 30' to bend in a controlled manner.

Referring again to figure 7, said guiding device preferably comprises two internal housings 306 configured to accommodate a wrapping pivot 307, around which said cable 30' can be wound in a serpentine manner.

Referring again to figure 7, a seventh semi-case 22'a can include the same technical characteristics as said third semi-case 22a, which has been described previously.

Furthermore, an eighth semi-case 22'b is similar to said fourth semi-case 22b previously described, except for the fact that said eighth semi-case 22'b does not include said housing seat 228b.

Referring again to figure 7, said second embodiment of said third section 301'd, unlike said first embodiment of said third section 301d, includes a rectangular shape and is configured to cover a portion of said cable 30' in proximity of said second connector 32, to which said cable 30' is coupled.

Said second embodiment of said third section 301'd is also configured to be fixed to said second case 20 by means of a system of screws 224' and bolts 224'a.

Furthermore, it is possible to bend a portion of said second embodiment of said third section 301'd, for example, near an end, to bring together said sixth section 302d.

Said sixth section 302d is configured to fit inside a recess 226b of said eighth semi-case 22'b, in a similar manner to as previously described.

Referring again to figure 7, said first segment 30b covers a portion of said cable 30' between said wrapping pivot 307, near which said first segment 30b is free, and said first flange 12.

As can be seen from figure 1, the numerical reference 500 indicates a pair of housings for a door hinge, not the subject of the present invention.

In particular, the jamb 200 and the shutter 100 can have a plurality of hinges 550 for the purpose of supporting and moving the door, while the component 1 fits, at least partially, respectively into a housing obtained from said shutter 100 and door jamb 200, which are different from the pairs of housings 500 used for the plurality of hinges 550, since said component 1 is only intended to electrically connect the jamb 200 and the shutter 100, and not to provide support and movement of the door.

The operation of said component 1 for swing doors creating an electrical connection between jamb 200 and door shutter 100 is as follows.

Said component 1 (or said component 1') is configured to provide an electrical connection from said jamb 200 to said door shutter 100 and to protect this electrical connection from, for example, unwanted jamming that occurs when opening or closing the door.

Said component 1, through said protective casing, for example including said foil 30, eliminates the exposure of the electrical connection cable 30' when the door is, for example, open and protects the cable even during the sliding phase.

Said first segment 30b of the foil 30, when the door is open, is inside said first case 10 and said third segment 30d of the foil 30 is inside said second case 20.

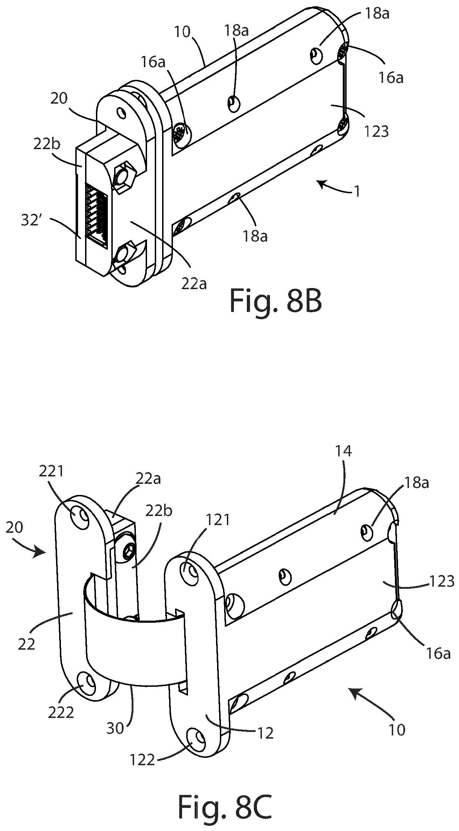

Referring to figure 8A, said component 1 is in a first configuration in which the door is open. In this configuration, said foil 30 is exposed and a segment, for example called second segment 30c (not indicated in figure 8A), flexes to accommodate the configuration of the door and protect said electrical connection cable 30' from accidental damage.

Referring to figure 8C, said component 1 is in a second configuration in which the door is open in such a way that said second case 20 remains stationary and said first case 10 is rotated by substantially 180° around said second case 20, with respect to the first configuration.2

Referring again to figures 8A and 8C, said foil 30 can have a shorter or longer outreach.

As can be seen from figure 8A, in said first configuration (of minimum outreach), the distance between said first 129 and second 229 slits is greater than the distance between said axes of symmetry of said first 12 and second 22 flange parallel to said second Y axis.

As can be seen from figure 8C, in said second configuration (of maximum outreach), the distance between said first 129 and second 229 apertures is less than the distance between said axes of symmetry of said first 12 and second 22 flange parallel to said second Y axis.

Consequently, in said first configuration, the distance between said first 10 and second 20 case is less than the distance between said first 10 and second 20 case that would be in said second configuration (of maximum outreach).

Said second (first) configuration can be obtained starting from said first (second) configuration by mounting said first 10 and second 20 case in such a way that said first 12 and second 22 flange are rotated by 180° with respect to said first X axis or by mounting said cable 30' and the relative connectors in a manner equivalent to said rotation.

Referring to figure 5, when the door is completely closed, said shutter 100 and said jamb 200 form an angle substantially of 0° and said first dimension L1 of said first 10 case and said fourth dimension L2 of said second 20 case form each other an angle substantially of 0°.

Therefore, when the door is completely closed, a portion of said cable 30', in proximity to said first segment 30b, is flexed inside the first case 10 and can be wound like a serpentine, in particular by means of at least one of said guide, preferably around said wrapping pivot 307 (in said second configuration of said component 1'), according to a preferential path.

Said at least one guiding device allows reducing the bends of said cable 30' or the forces exerted on it, which can damage said cable 30'.

Furthermore, making reference to figures 5, 8B, and 9, when the door is completely closed, said cable 30' flexes inside the first case 10, said first 30b and second 30c segments are substantially parallel to said X axis, said first segment 30b is completely inside said first case 10, said second segment 30c, is at least partially, in a space between said first 10 and second 20 case, and said third segment 30d is inside said second case 20.

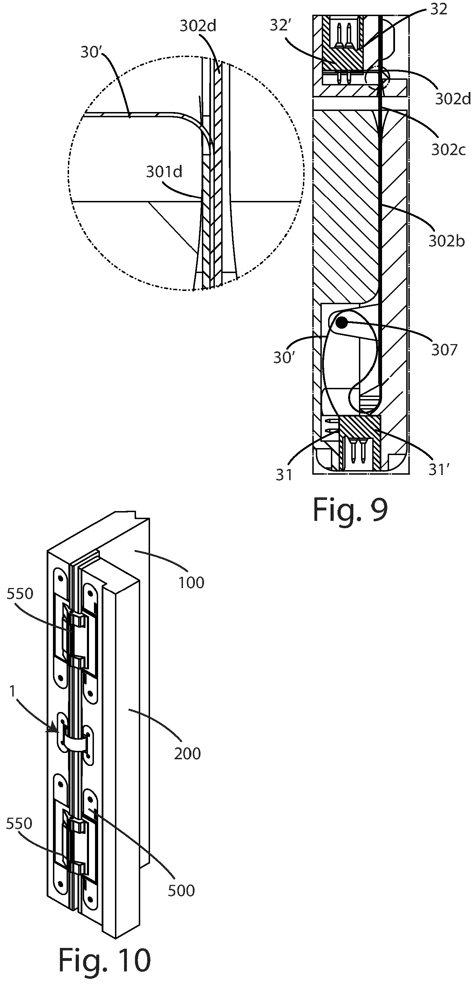

Furthermore, as can be seen from the enlarged detail on the left side of figure 9, said third segment 30d, which is substantially parallel to said first, parallel to each other, and a second portion, in which said third section 301d, which has a length less than the length of said sixth section 302d, is free.

As a result of this difference between the lengths of said third 301d and sixth 301d section, said cable 30' can emerge from said third segment 30d, substantially perpendicular to said third 301d and sixth 302d section, and couple to said second connector 32 and second terminal block 32'.

In some actuation phases, said second segment 30c can be partially inside said first case 10.

When the door opens, said foil 30 flexes and a portion of said second plate 302 faces towards said first 10 and second 20 case, while said first plate 301 faces in the opposite direction to said jamb 200 and said door shutter 100.

In particular, when the door opens, said second segment 30c extends, comes out from said first 10 and second 20 case and follows the movement of the door, flexing in such a way that, in the condition of maximum opening of the door, said second plate 302 faces towards said first 10 and second 20 case, while said first plate 301 faces in the direction opposite to said jamb 200 and shutter 100, as previously described.

As a result of the opening of the door, said cable 30' unrolls and extends substantially parallel to said first, in particular by means of said guiding device, along said first X axis, approaching said first flange 12.

Said third segment 30d, which is fixed inside said second case 20, remains stationary.

Referring to figure 6, when the door is opened in such a way that said shutter 100 and said jamb 200 form an angle substantially of 180°, said first dimension L1 of said first case 10 and said fourth dimension L2 of said second 20 case form between them an angle substantially of 180°.

Said first dimension L1 of said first case 10 and said fourth dimension L2 of said second 20 case are substantially parallel to said X axis.

In this configuration, said cable 30' includes a stretched portion that extends from said first connector 31 to said second hollow internal portion 302', and preferably around said pivot 307, said first segment 30b covers a portion of said second fraction of said cable 30' which extends from said guiding device to said first flange 12 (preferably around said pivot 307 in said second embodiment of said component 1').

In this way, said first segment 30b is arranged substantially parallel to said axis X, with a first end in proximity to said pivot 307 (in said second embodiment of said component 1') free to move and a second end in contact with said second segment 30c, which is substantially exposed, outside of said first 10 and second 20 case, and said third segment 30d is inside said second 20 case.

When the door closes, a portion of said cable 30', in proximity to said first segment 30b, flexes inside the first case 10 and wraps inside it, for example, around said wrapping pivot 307 (in said second embodiment of said component 1').

Said first segment 30b is substantially parallel to said X axis within said first case 10, and translates, getting closer to the wrapping point of said cable 30', so as to avoid that said cable 30' may wrap in an uncontrolled manner.

As a result of the closing movement of the door, said second segment 30c stretches, up to a maximum, when the door is completely closed, in which said first 301 and second 302 plates are substantially perpendicular to said first 12 and second 22 flange, which are parallel to each other.

Furthermore, said second segment 30c translates, following the translation of said first segment 30b, and enters, at least partially, inside said first case 10, crossing said first aperture 129 of said first flange 12.

Similarly to the opening phase, said third segment 30d, which is fixed inside said second case 20, remains stationary.

### Advantages

As is evident from the description above, the component described allows the electrical connection between a jamb and a door shutter.

Furthermore, the component reduces the risk of damaging an electrical cable that allows the electrical connection to be made as it includes protection elements and is mounted on special slots.

Therefore, this component is independent of the number and arrangement of hinges that implement the door and, consequently, cannot be damaged by the implementation of these hinges.

Furthermore, the component covers the electric cable with a protective casing with variable rigidity, which protects it from accidental damage and allows controlled bending according to a preferential path.

Furthermore, the protective casing can include a foil that covers the electrical cable and preserves the aesthetics of the door and avoiding exposure of the electrical cable.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Component (1) for a door comprising a shutter (100) and a jamb (200), for the electrical connection between said shutter (100) and said jamb (200), the shutter (100) having a given opening kinematics with respect to the jamb (200), said component (1) being only intended to be electrically connected to the jamb (200) and the shutter (100), and not to provide support and movement of the door, and being fitted at least partially into a housing obtained from said shutter (100) and door jamb (200) different from pairs of housings (500) used for a plurality of hinges (550), wherein said component (1) comprises a first case (10) configured to be mounted in said shutter (100) and a second case (20) configured to be mounted in said jamb (200), **characterized**
**in that** it comprises a flat-type power supply cable (30') having a first end capable to be connected to a first connector (31) and a second end capable to be connected to a second connector (32), and
**in that** it comprises a protective casing having a variable stiffness configured to protect said cable (30'), and capable to allow the bending of a first fraction of said cable (30') within said first case (10), the shifting of at least one second fraction of said cable (30') between said first (10) and second (20) case, and a section of said protective casing being exposed out from at least one of said first (10) and second (20) cases, such that said component being capable of, by means of a greater or smaller length of said section being exposed, compensating for differences of kinematics of the shutter (100) and/or of the outreach of the opening thereof;
wherein said first fraction of said cable (30') is configured to bend inside said first case (10)
wherein said second fraction of said cable (30') is configured to be wrapped, or partially covered, by said protective casing so as to translate in a protected manner between said first (10) and second (20) case;
and wherein due to said protective casing said second fraction of said cable (30') is more rigid than said first fraction not covered by said protective casing.

2. Component (1) according to the preceding claim, wherein said protective casing comprises a protection foil (30) configured to protect said cable (30'), wherein:
- said foil (30) is configured for being exposed from said first case (10) to said second case (20);
- said foil (30) comprises a first (30b), a second (30c) and a third (30d) segment; and
- said second segment (30c) is configured to bend between said first (10) and second (20) case.

3. Component (1) according to the preceding claim, wherein said foil (30) comprises a first plate (301) and a second plate (302), between which there is said cable (30').

4. Component (1) according to the preceding claim, wherein a portion of said first plate (301) adheres to a portion of said second plate (302) by means of glue, double-sided tape, or other mutual coupling means.

5. Component (1) according to any one of claims 2-4, wherein said foil (30) is configured to shift, whereas said door opens, from said first case (10) to the exterior and, whereas said door closes, from the exterior towards said first case (10), such to bend said cable (30') within said first case (10).

6. Component (1) according to any one of the preceding claims, wherein said first case (10) comprises a first dimension (L1) and said second case (20) comprises a fourth dimension (L2), such that said first dimension (L1) is greater than said fourth dimension (L2).

7. Component (1) according to any one of the preceding claims, wherein said first case (10) comprises a first flange (12) and said second case (20) comprises a second flange (22) to fasten said component (1) to respectively an outline of said shutter (100) and jamb (200).

8. Component (1) according to the preceding claim, wherein said first flange (12) comprises a first aperture (129) arranged asymmetrical with respect to an axis of symmetry of the surface of said first flange (12) and said second flange (22) comprises a second aperture (229) arranged asymmetrical with respect to an axis of symmetry of the surface of said second flange (22).

9. Component (1) according to any one of claims 2-8, wherein said first segment (30b) is close to a first end of said foil (30), said third segment (30d) is close to a second end of said foil (30) and said second segment (30c) is in between said first (30b) and third (30d) segment.

10. Component (1) according to any one of claims 7-9, comprising:
- a first clamp terminal block (31') arranged to an end of said first case (10) opposite said first flange (12);
- a second clamp terminal block (32') arranged to an end of said second case (20) opposite said second flange (22); wherein
- said component (1) is configured to protect said cable (30'), wherein said first and second fraction of said cable (30') are configured to respectively couple to said first (31) and second (32) connector, which are respectively pluggable to said first (31') and second (32') clamp terminal block, wherein
- said first segment (30b) is configured to cover a portion of said second fraction of said cable (30') in a location between said first fraction of said cable (30') and said first flange (12); and
- said third segment (30d) is configured to cover a portion of said second fraction of said cable (30') in a location between said second clamp terminal block (32') and said second flange (22).

11. Component (1) according to any one of the preceding claims, wherein said cable (30') wraps itself within said first case (10) by means of a guide device, preferably around a wrapping pivot (307), whereas said door closes.

12. Component (1) according to any of claims 2-11, wherein said foil (30) comprises a flexible metallic material configured to bend said foil (30) in at least a part thereof.

13. Door comprising a component (1) according to any one of the preceding claims wherein said door comprises a shutter (100) and a jamb (200), wherein said shutter (100) comprises a housing hosting said first case (10) of said component (1) and said jamb (200) comprises a housing hosting said second case (20) of said component (1), wherein the jamb (200) and the shutter (100) have a plurality of hinges (550) for the purpose of supporting and moving the door and using pairs of housings (500) different from the housing obtained from said shutter (100) and jamb (200) which the component (1) at least partially fits into, said component (1) being only intended to electrically connect the jamb (200) and the shutter (100), and not to provide support and movement of the door.

## Patentansprüche

1. Komponente (1) für eine Tür, umfassend einen Fensterladen (100) und einen Pfosten (200),
für die elektrische Verbindung zwischen dem Fensterladen (100) und dem Pfosten (200), wobei der Fensterladen (100) eine bestimmte Öffnungskinematik in Bezug auf den Pfosten (200) aufweist, wobei die Komponente (1) nur dazu bestimmt ist, elektrisch mit dem Pfosten (200) und dem Fensterladen (100) verbunden zu werden und nicht, um eine Stütze und Bewegung der Tür bereitzustellen, und zumindest teilweise in eine Einhausung eingepasst ist, die aus dem Fensterladen (100) und dem Türpfosten (200) gewonnen ist und sich von Paaren von Einhausungen (500) unterscheidet, die für eine Vielzahl von Scharnieren (550) genutzt werden, wobei die Komponente (1) einen ersten Kasten (10) umfasst, der ausgelegt ist, um in dem Fensterladen (100) montiert zu werden, und einen zweiten Kasten (20), der ausgelegt ist, um in dem Pfosten (200) montiert zu werden, **dadurch gekennzeichnet,**
**dass** sie ein Stromversorgungskabel (30') vom flachen Typ umfasst, aufweisend ein erstes Ende, das in der Lage ist, mit einem ersten Verbinder (31) verbunden zu werden, und ein zweites Ende, das in der Lage ist, mit einem zweiten Verbinder (32) verbunden zu werden, und
**dass** sie ein Schutzgehäuse umfasst, aufweisend eine variable Steifigkeit, das ausgelegt ist, um das Kabel (30') zu schützen und in der Lage ist, das Biegen eines ersten Anteils des Kabels (30') in dem Kasten (10), das Verlagern von mindestens einem zweiten Anteil des Kabels (30') zwischen dem ersten (10) und zweiten (20) Kasten zu erlauben, und wobei eine Sektion des Schutzgehäuses von mindestens entweder dem ersten (10) oder zweiten (20) Kasten nach außen freiliegt, sodass die Komponente in der Lage ist, mittels einer größeren oder kleineren Länge der freiliegenden Sektion, Kinematikdifferenzen des Fensterladens (100) und/oder der Reichweite dessen Öffnung auszugleichen,
wobei der erste Anteil des Kabels (30') ausgelegt ist, um in dem ersten Kasten (10) gebogen zu werden,
wobei der zweite Anteil des Kabels (30') ausgelegt ist, um von dem Schutzgehäuse eingehüllt oder teilweise bedeckt zu werden, sodass er sich auf eine geschützte Weise zwischen dem ersten (10) und zweiten (20) Kasten verschiebt,
und wobei der zweite Anteil des Kabels (30') aufgrund des Schutzgehäuses starrer ist als der erste Anteil, der nicht von dem Schutzgehäuse bedeckt ist.

2. Komponente (1) nach dem vorhergehenden Anspruch, wobei das Schutzgehäuse eine Schutzfolie (30) umfasst, die ausgelegt ist, um das Kabel (30') zu schützen, wobei:
- die Folie (30) ausgelegt ist, um von dem ersten Kasten (10) zum zweiten Kasten (20) freiliegend zu sein;
- die Folie (30) ein erstes (30b), ein zweites (30c) und ein drittes (30d) Segment umfasst, und
- das zweite Segment (30c) ausgelegt ist, um sich zwischen dem ersten (10) und zweiten (20) Kasten zu biegen.

3. Komponente (1) nach dem vorhergehenden Anspruch, wobei die Folie (30) eine erste Platte (301) und eine zweite Platte (302) umfasst, zwischen denen sich das Kabel (30') befindet.

4. Komponente (1) nach dem vorhergehenden Anspruch, wobei ein Abschnitt der ersten Platte (301) an einem Abschnitt der zweiten Platte (302) mittels Leim, doppelseitigen Klebebands oder sonstigen gegenseitigen Kopplungsmitteln haftet.

5. Komponente (1) nach einem der Ansprüche 2-4, wobei die Folie (30) ausgelegt ist, um sich von dem ersten Kasten (10) zur Außenseite zu verlagern, wenn sich die Tür öffnet, und von der Außenseite zu dem ersten Kasten (10), wenn sich die Tür schließt, sodass das Kabel (30') in dem ersten Kasten (10) gebogen wird.

6. Komponente (1) nach einem der vorhergehenden Ansprüche, wobei der erste Kasten (10) eine erste Abmessung (L1) umfasst und der zweite Kasten (20) eine vierte Abmessung (L2) umfasst, derart, dass die erste Abmessung (L1) größer ist als die vierte Abmessung (L2).

7. Komponente (1) nach einem der vorhergehenden Ansprüche, wobei der erste Kasten (10) einen ersten Flansch (12) umfasst und der zweite Kasten (20) einen zweiten Flansch (22) umfasst, um die Komponente (1) jeweils an einem Profil des Fensterladens (100) und des Pfostens (200) zu befestigen.

8. Komponente (1) nach dem vorhergehenden Anspruch, wobei der erste Flansch (12) eine erste Öffnung (129) umfasst, die asymmetrisch in Bezug auf eine Symmetrieachse der Oberfläche des ersten Flanschs (12) angeordnet ist, und der zweite Flansch (22) eine zweite Öffnung (229) umfasst, die asymmetrisch in Bezug auf eine Symmetrieachse der Oberfläche des zweiten Flanschs (22) angeordnet ist.

9. Komponente (1) nach einem der Ansprüche 2-8, wobei sich das erste Segment (30b) nahe an einem ersten Ende der Folie (30) befindet, sich das dritte Segment (30d) nahe an einem zweiten Ende der Folie (30) befindet und sich das zweite Segment (30c) zwischen dem ersten (30b) und dem dritten (30d) Segment befindet.

10. Komponente (1) nach einem der Ansprüche 7-9, umfassend:
- einen ersten Klemmanschlussblock (31'), der an einem Ende des ersten Kastens (10) entgegengesetzt zu dem ersten Flansch (12) angeordnet ist;
- einen zweiten Klemmanschlussblock (32'), der an einem Ende des zweiten Kastens (20) entgegengesetzt zu dem zweiten Flansch (22) angeordnet ist, wobei
- die Komponente (1) ausgelegt ist, um das Kabel (30') zu schützen, wobei der erste und zweite Anteil des Kabels (30') ausgelegt sind, um jeweils mit dem ersten (31) und zweiten (32) Verbinder gekuppelt zu werden, die jeweils in den ersten (31') und zweiten (32') Klemmanschlussblock eingesteckt werden können, wobei
- das erste Segment (30b) ausgelegt ist, um einen Abschnitt des zweiten Anteils des Kabels (30') an einer Stelle zwischen dem ersten Anteil des Kabels (30') und dem ersten Flansch (12) zu bedecken, und
- das dritte Segment (30d) ausgelegt ist, um einen Abschnitt des zweiten Anteils des Kabels (30') an einer Stelle zwischen dem zweiten Teil des Klemmanschlussblocks (32') und dem zweiten Flansch (22) zu bedecken.

11. Komponente (1) nach einem der vorhergehenden Ansprüche, wobei das Kabel (30') in dem ersten Kasten (10) mittels einer Führungsvorrichtung aufgewickelt wird, vorzugsweise rund um einen Wickeldrehpunkt (307), wenn sich die Tür schließt.

12. Komponente (1) nach einem der Ansprüche 2-11, wobei die Folie (30) ein flexibles Metallmaterial umfasst, das ausgelegt ist, um die Folie (30) zumindest in einem Teil davon zu biegen.

13. Tür, umfassend eine Komponente (1) nach einem der vorhergehenden Ansprüche, wobei die Tür einen Fensterladen (100) und einen Pfosten (200) umfasst, wobei der Fensterladen (100) eine Einhausung umfasst, die den ersten Kasten (10) der Komponente (1) beherbergt, und der Pfosten (200) eine Einhausung umfasst, die den zweiten Kasten (20) der Komponente (1) beherbergt, wobei der Pfosten (200) und der Fensterladen (100) eine Vielzahl von Scharnieren (550) aufweisen, um die Tür zu stützen und zu bewegen, und Paare von Einhausungen (500) nutzen, die sich von der Einhausung unterscheiden, die von dem Fensterladen (100) und dem Pfosten (200) gewonnen werden, in die die Komponente (1) zumindest teilweise eingepasst ist, wobei die Komponente (1) nur dazu bestimmt ist, den Pfosten (200) und den Fensterladen (100) elektrisch zu verbinden und nicht, um eine Stütze und Bewegung der Tür bereitzustellen.

## Revendications

1. Composant (1) pour une porte comprenant un volet (100) et un montant (200),
pour la connexion électrique entre ledit volet (100) et ledit montant (200), le volet (100) comportant une cinématique d'ouverture donnée par rapport au montant (200), ledit composant (1) étant uniquement destiné à être connecté électriquement au montant (200) et au volet (100), et non à assurer le support et le mouvement de la porte, et étant ajusté au moins partiellement dans un logement obtenu à partir desdits volet (100) et montant (200) de porte différent des paires de logements (500) utilisés pour une pluralité de charnières (550), dans lequel ledit composant (1) comprend un premier gond (10) configuré pour être monté dans ledit volet (100) et un second gond (20) configuré pour être monté dans ledit montant (200), **caractérisé**
**en ce qu'**il comprend un câble d'alimentation électrique (30') de type plat comportant une première extrémité pouvant être connectée à un premier connecteur (31) et une seconde extrémité pouvant être connectée à un second connecteur (32), et
**en ce qu'**il comprend une enveloppe de protection ayant une rigidité variable configurée pour protéger ledit câble (30'), et capable de permettre le pliage d'une première partie dudit câble (30') à l'intérieur dudit premier gond (10), le déplacement d'au moins une seconde partie dudit câble (30') entre lesdits premier (10) et second (20) gonds, et une section de ladite enveloppe de protection étant exposée à l'extérieur d'au moins l'un desdits premier (10) et second (20) gonds, de telle sorte que ledit composant soit capable, au moyen d'une longueur plus ou moins grande de ladite section étant exposée, de compenser les différences de cinématique du volet (100) et/ou de la portée de son ouverture ;
dans lequel ladite première partie dudit câble (30') est configurée pour se plier à l'intérieur dudit premier gond (10),
dans lequel ladite seconde partie dudit câble (30') est configurée pour être enroulée, ou partiellement recouverte, par ladite enveloppe de protection de manière à translater de manière protégée entre lesdits premier (10) et second (20) gonds ;
et dans lequel, grâce à ladite enveloppe de protection, ladite seconde partie dudit câble (30') est plus rigide que ladite première partie non recouverte par ladite enveloppe de protection.

2. Composant (1) selon la revendication précédente, dans lequel ladite enveloppe de protection comprend une feuille de protection (30) configurée pour protéger ledit câble (30'), dans lequel :
- ladite feuille (30) est configurée pour être exposée dudit premier gond (10) vers ledit second gond (20) ;
- ladite feuille (30) comprend un premier (30b), un deuxième (30c) et un troisième (30d) segment ; et
- ledit deuxième segment (30c) est configuré pour se plier entre ledit premier (10) et ledit second (20) gond.

3. Composant (1) selon la revendication précédente, dans lequel ladite feuille (30) comprend une première plaque (301) et une seconde plaque (302), entre lesquelles se trouve ledit câble (30').

4. Composant (1) selon la revendication précédente, dans lequel une portion de ladite première plaque (301) adhère à une portion de ladite seconde plaque (302) au moyen de colle, de ruban adhésif double face ou d'autres moyens d'accouplement mutuel.

5. Composant (1) selon l'une quelconque des revendications 2-4, dans lequel ladite feuille (30) est configurée pour se déplacer, alors que ladite porte s'ouvre, dudit premier gond (10) vers l'extérieur et, alors que ladite porte se ferme, de l'extérieur vers ledit premier gond (10), de manière à plier ledit câble (30') à l'intérieur dudit premier gond (10).

6. Composant (1) selon l'une quelconque des revendications précédentes, dans lequel ledit premier gond (10) comprend une première dimension (L1) et ledit second gond (20) comprend une quatrième dimension (L2), de telle sorte que ladite première dimension (L1) est supérieure à ladite quatrième dimension (L2).

7. Composant (1) selon l'une quelconque des revendications précédentes, dans lequel ledit premier gond (10) comprend une première bride (12) et ledit second gond (20) comprend une seconde bride (22) pour fixer ledit composant (1) respectivement à un contour desdits volet (100) et montant (200).

8. Composant (1) selon la revendication précédente, dans lequel ladite première bride (12) comprend une première ouverture (129) disposée de manière asymétrique par rapport à un axe de symétrie de la surface de ladite première bride (12) et ladite seconde bride (22) comprend une seconde ouverture (229) disposée de manière asymétrique par rapport à un axe de symétrie de la surface de ladite seconde bride (22).

9. Composant (1) selon l'une quelconque des revendications 2-8, dans lequel ledit premier segment (30b) est proche d'une première extrémité de ladite feuille (30), ledit troisième segment (30d) est proche d'une seconde extrémité de ladite feuille (30) et ledit deuxième segment (30c) est situé entre lesdits premier (30b) et troisième (30d) segments.

10. Composant (1) selon l'une quelconque des revendications 7-9, comprenant :
- un premier bornier de serrage (31') disposé à une extrémité dudit premier gond (10) opposé à ladite première bride (12) ;
- un second bornier de serrage (32') disposé à une extrémité dudit second gond (20) opposé à ladite seconde bride (22) ; dans lequel
- ledit composant (1) est configuré pour protéger ledit câble (30'), dans lequel lesdites première et deuxième parties dudit câble (30') sont configurées pour se coupler respectivement audit premier (31) et second (32) connecteurs, qui sont respectivement enfichables dans lesdits premier (31') et second (32') borniers de serrage, dans lequel
- ledit premier segment (30b) est configuré pour recouvrir une portion de ladite seconde partie dudit câble (30') dans un emplacement situé entre ladite première partie dudit câble (30') et ladite première bride (12) ; et
- ledit troisième segment (30d) est configuré pour recouvrir une portion de ladite seconde partie dudit câble (30') dans un emplacement situé entre ledit second bornier de serrage (32') et ladite seconde bride (22).

11. Composant (1) selon l'une quelconque des revendications précédentes, dans lequel ledit câble (30') s'enroule à l'intérieur dudit premier gond (10) au moyen d'un dispositif de guidage, de préférence autour d'un pivot d'enroulement (307), alors que ladite porte se ferme.

12. Composant (1) selon l'une quelconque des revendications 2-11, dans lequel ladite feuille (30) comprend un matériau métallique flexible configuré pour plier ladite feuille (30) dans au moins une partie de celle-ci.

13. Porte, comprenant un composant (1) selon l'une quelconque des revendications précédentes, dans laquelle ladite porte comprend un volet (100) et un montant (200), dans laquelle ledit volet (100) comprend un logement logeant ledit premier gond (10) dudit composant (1) et ledit montant (200) comprend un logement logeant ledit second gond (20) dudit composant (1), dans laquelle le montant (200) et le volet (100) comportent une pluralité de charnières (550) dans le but de supporter et de déplacer la porte et d'utiliser des paires de logements (500) différents du logement obtenu à partir desdits volet (100) et montant (200) dans lequel le composant (1) s'ajuste au moins partiellement, ledit composant (1) étant uniquement destiné à connecter électriquement le montant (200) et le volet (100), et non à assurer le support et le mouvement de la porte.
